# EUROPÄISCHE PATENTSCHRIFT

(11) **EP 0 554 874 B1**
(45) Veröffentlichungstag und Bekanntmachung des Hinweises auf die Patenterteilung: **18.01.1995**
(21) Anmeldenummer: 93101751.1
(22) Anmeldetag: 04.02.1993
(51) Int. Cl.: B62M 11/16

(54) **Mehrgang-Antriebsnabe für Fahrräder**
Multiple ratio drive hub for bicycle
Moyeu d'entraînement à vitesses multiples pour bicyclette

(30) Priorität: 07.02.1992 DE 4203509
(43) Veröffentlichungstag der Anmeldung: 11.08.1993
(73) Patentinhaber: Fichtel & Sachs AG, D-97419 Schweinfurt (DE)
(72) Erfinder: Nürnberger, Günter, Dipl.-Ing. (FH), W-8720 Schweinfurt (DE)
(74) Vertreter: Prechtel, Jörg, Dipl.-Phys. Dr.

(56) Entgegenhaltungen:
- AT-B- 165 740
- DE-A- 2 514 418
- DE-A- 4 142 867
- DE-C- 814 982
- FR-A- 911 358
- GB-A- 2 166 502

## Beschreibung

Die Erfindung betrifft eine Mehrgang-Antriebsnabe, umfassend:
- eine an einem Fahrradrahmen drehfest anbringbare Nabenachse,
- einen an der Nabenachse um eine Drehachse drehbar gelagerten Antreiber,
- eine an der Nabenachse drehbar gelagerte, ein Nabenschaltgetriebe umgreifende Nabenhülse,
- ein Planetengetriebe als Teil des Nabenschaltgetriebes, umfassend:
   - einen in Richtung der Drehachse länglichen Planetenradträger, welcher im Bereich eines seiner beiden Axial-Enden mittels eines ersten Lagerabschnitts an der Nabenachse um die Drehachse drehbar gelagert ist,
   - wenigstens ein am Planetenradträger drehbar gelagertes, mehrstufiges Planetenrad,
   - jeweils ein den einzelnen Stufen des Planetenrads zugeordnetes und mit diesen Stufen kämmendes Sonnenrad, welches auf der Nabenachse um die Drehachse drehbar gelagert ist und in einer jeweiligen axialen Zuschaltposition wahlweise mit der Nabenachse drehfest verbindbar ist,
   - ein innerhalb der Nabenhülse um die Drehachse drehbar gelagertes Hohlrad, welches mit einer Stufe des Planetenrads kämmt,
- eine Kupplungseinrichtung zur Koppelung des Antreibers mit dem Planetenradträger oder mit dem Hohlrad,
- eine an der Nabenachse beweglich gelagerte Schalteinrichtung für das Nabenschaltgetriebe.

Eine derartige Mehrgangs-Antriebsnabe ist beispielsweise aus der DE-PS 814 982 bekannt. Die Planetenräder sind in einer Ausführungsform zweistufig und in der anderen dreistufig, so daß dementsprechend zwei bzw. drei Sonnenräder vorgesehen sind, von denen jeweils eines wahlweise mit der Nabenachse drehfest verbindbar ist. Je nach Stellung der Schalteinrichtung verläuft der Kraftfluß vom Antreiber aus über den Planetenradträger, dann über die am jeweils ausgewählten Sonnenrad abrollenden Planetenräder zum Hohlrad und von diesem zur Nabenhülse (Schnellgänge); der Kraftfluß kann auch vom Antreiber auf den Planetenradträger und von diesem unmittelbar zur Nabenhülse verlaufen (direkter Gang); schließlich kann der Kraftfluß auch vom Antreiber über das Hohlrad zu den am jeweils ausgewählten feststehenden Sonnenrad abrollenden Planetenrädern erfolgen, die wiederum den die Nabenhülse antreibenden Planetenradträger in Bewegung setzen (Berggänge). Der Planetenradträger steht somit je nach Art der Belastung und Stellung der Schalteinrichtung unter wechselnden mechanischen Belastungen mit unterschiedlichen Kraftwegen. Der Planetenradträger ist bei der bekannten Ausführungsform lediglich im Bereich seines einen Axialendes, welches dem Antreiber zugewandt ist, an der Nabenachse drehbar gelagert. Das andere Axialende des Planetenradträgers stützt sich an einem Ringvorsprung eines Stirnflansches der Nabenhülse ab, um radiale Reaktionskräfte der in diesem Bereich vorgesehenen Klinkenkupplung (Klinkengesperre) aufnehmen zu können. Der Umkreisdurchmesser der Sonnenräder fällt in Richtung vom einen Axialende zum anderen Axialende des Planetenradträgers hin ab.

Die Lagerung des Planetenradträgers im Bereich seines anderen Axialendes an der Nabenhülse hat den Nachteil, daß sich etwaige herstellungsbedingte oder nach längerem Gebrauch aufgrund von Verschleiß einstellende Ungenauigkeiten, insbesondere Spiel im Lager zwischen Nabenhülse und Nabenachse, sich unmittelbar auf den an der Nabenhülse gelagerten Planetenradträger auswirken, so daß dieser dementsprechend unrund läuft. Dies kann zu erhöhtem Verschleiß und erhöhter Geschräuschentwicklung und erhöhten Reibungsverlusten führen.

Aus der österreichischen Patentschrift 16 57 40 ist eine Mehrgangs-Antriebsnabe für Fahrräder bekannt, bei der zwar ein Planetenradträger mit zweistufigen Planetenrädern vorgesehen ist, wobei jedoch lediglich ein einziges Sonnenrad vorgesehen ist, das in ständigem Zahneingriff mit einer der beiden Stufen des Planetenrads steht. Die andere Stufe steht in ständigem Eingriff mit dem Hohlrad. Das vom Antreiber abgelegene andere Axialende des Planetenradträgers stützt sich hier über einen Satz von Planetenrädern an einem weiteren Sonnenrad ab, welches wahlweise mit der Nabenachse drehfest verbindbar ist. Die Genauigkeit der Lagerung des Planetenradträgers an der Nabenachse, d.h. die Genauigkeit der Übereinstimmung der momentanen Drehachse des Planetenradträgers mit der Drehachse der Nabenachse während des Betriebs, hängt also hier von der Exaktheit der Lagerung des Sonnenrads an der Nabenachse sowie von der Genauigkeit der an diesem Sonnenrad abrollenden Planetenräder ab. Ungünstig ist hierbei auch, daß sich das andere Axialende des Planetenradträgers mit seiner Hohlradverzahnung nur punktuell, d.h. über die wenigen, beispielsweise drei Planetenräder am Sonnenrad abstützt, was unter Umständen eine hohe Flächenbelastung des Hohlrads mit elastischer oder plastischer Verformung und ggf. Vibrationsanregungen nach sich führt, was wiederum die Lagegenauigkeit beeinträchtigt.

Aus der britischen Patentschrift 21 66 502, die der DE-OS 34 40 068 entspricht, ist eine Mehrgang-Antriebsnabe für Fahrräder bekannt, bei der der zweistufige Planetenräder tragende Planetenradträger mit seinem vom Antreiber abgewandten einen Axialende an der Nabenachse drehbar gelagert ist. An seinem anderen Axialende ist der Planetenradträger mit einem hohlzylindrischen Bund versehen, der an seinem Außenumfang ein Klinkengesperre zum Antreiber hin trägt. Innerhalb des Bundes befindet sich eine Schraubendruckfeder sowie ein Teil der Schalteinrichtung für das Nabenschaltgetriebe, insbesondere eine Schaltklinke, oder eine Schalthülse. Das andere Axialende ist also nicht an der Nabenachse drehbar gelagert, so daß der Planetenradträger lediglich an seinem einen Axialende an der Nabenachse drehbar gelagert ist ("fliegende Lagerung"). Der Planetenradträger kann daher im Bereich seines anderen Axialendes unerwünschte Radialbewegungen ausführen mit der Folge erhöhter Geräuschentwicklung und erhöhten Verschleißes. Da der Bund am anderen Axialende geringeren Durchmesser als das größte Sonnenrad aufweist, kann der Zusammenbau nur dadurch erfolgen, daß nach Entfernung zumindest eines Planetenrads die beiden Sonnenräder in den Planetenradträger radial nach innen eingeführt werden und dort in zentrische Lager gehalten werden, so daß anschließend die Nabenachse durch den Planetenradträger und die Sonnenräder hindurch eingeschoben werden kann. Anschließend ist das vorher entfernte Planetenrad wieder einzusetzen.

Aus der nachveröffentlichten DE-OS 41 42 867 ist eine Mehrgang-Antriebsnabe für Fahrräder bekannt, bei der der mehrteilige Planetenradträger lediglich einseitig an der Nabenachse drehbar gelagert ist.

Eine Aufgabe der Erfindung liegt darin, eine Mehrgangs-Antriebsnabe der eingangs genannten Art mit verbesserten Laufeigenschaften bereitzustellen.

Diese Aufgabe wird dadurch gelöst, daß der Planetenradträger im Bereich seines anderen Axial-Endes mit einem zweiten Lagerabschnitt an der Nabenachse drehbar gelagert ist. Aufgrund dieser nunmehr zweiseitigen Lagerung des Planetenradträgers an der Nabenachse ist ruhiger, verschleißarmer Lauf des Planetenradträgers in sämtlichen Belastungszuständen gewährleistet.

In einer bevorzugten Ausführungsform der Erfindung ist Vorgesehen, daß der zweite Lagerabschnitt mittels eines zur Drehachse konzentrisch angeordneten, gesonderten Lagerrings an der Nabenachse gelagert ist. Der gesonderte Lagerring ermöglicht den Einsatz einer besonders kostengünstig herstellbaren Nabenachse mit angenähert konstantem Querschnitt. Der Lagerring kann auch mit relativ großer radialer Ringdicke ausgebildet sein, so daß auch dann eine zweiseitige Lagerung des Planetenradträgers gewährleistet ist, wenn der freie Durchmesser des zweiten Lagerabschnitts zumindest etwas größer ist als der Umkreisdurchmesser des größten der Sonnenräder, um auf diese Weise eine vereinfachte Montagemöglichkeit zu erhalten. Es können nämlich dann zuerst die Sonnenräder auf die Nabenachse aufgeschoben werden und anschließend der Planetenradträger.

Falls hierbei, wie in einer Weiterbildung der Erfindung vorgeschlagen, der Umkreisdurchmesser der Sonnenräder in Richtung vom einen Axialende zum anderen Axialende des Planetenradträgers ansteigt, können die Planetenradträger auch am Planetenradträger vormontiert sein, bevor dieser über die Sonnenräder geschoben wird.

Ferner kann vorgesehen sein, daß der Lagerring einen Anschlagsabschnitt aufweist, der einen Axialanschlag für die Sonnenräder bildet. Die Sonnenräder werden auf diese Weise nach dem Aufschieben selbsttätig in ihrer gewünschten Lage festgelegt.

Bevorzugt ist vorgesehen, daß der Lagerring einen Hohlzylinder-Abschnitt aufweist, dessen eines Zylinderende den Axialanschlag bildet und an dessen anderem Zylinderende ein sich radial nach außen erstreckender Ringflansch-Abschnitt ausgebildet ist, dessen Außenumfangsfläche als Lagerfläche für den zweiten Lagerabschnitt des Planetenradträgers ausgebildet ist. Der Lagerring ist bei geringem Gewicht und geringem Materialverbrauch ausreichend stabil, um die in erster Linie radialen Lagerkräfte des Planetenradträgers aufnehmen zu können. Bevorzugt besteht der Lagerring aus einem einteiligen Kunststoffmaterial.

Besonders bevorzugt ist vorgesehen, daß der Durchmesser eines eine Lagerfläche für den zweiten Lagerabschnitt des Planetenradträgers aufweisenden Abschnitts des Lagerrings größer ist als der Umkreis-Durchmesser des größten der Sonnenräder. Der Zusammenbau gestaltet sich somit besonders einfach, da der Reihe lediglich der Lagerring, dann die Sonnenräder und schließlich der Planetenradträger einschließlich der Planetenräder auf die Nabenachse aufzuschieben ist mit anschließender axialer Fixierung des Planetenradträgers, wobei ggf. eine Vorspannfeder zwischen den Sonnenrädern und dem ersten Lagerabschnitt des Planetenradträgers vorgesehen sein kann.

Einen günstigen Kraftfluß bei kompaktem Aufbau erhält man dadurch, daß der Antreiber auf der Seite des anderen Axial-Endes des Planetenradträgers angeordnet ist.

Um einen Übersetzungsbereich entsprechend der aus der DE-OS 34 40 068 bekannten Mehrgang-Antriebsnabe mit fünf Gängen zu erhalten, jedoch mit einer größeren Anzahl von Gängen, d.h. mit kleineren Gangsprüngen, ohne Verlust an Wirkungsgrad, bei weiterhin kostengünstiger Herstellbarkeit, wird vorgeschlagen, daß das wenigstens eine Planetenrad wenigstens drei Stufen mit unterschiedlichem Durchmesser aufweist.

Man erhält hierdurch eine Mehrgang-Antriebsnabe, bei der durch die dreifache Aufteilung der über das Planetengetriebe laufenden Antriebsdrehmomentwege sowohl bei den Berggängen als auch bei den Schnellgängen relativ enge Gangstufen erzielt werden. Das Getriebe der Nabe ist von seinem Aufbau her mit einem Ziehkeil-Getriebe vergleichbar, das durch wahlweises Festlegen jeweils eines Sonnenrades aus einer Mehrzahl von Sonnenrädern durch einen Schubklotz mehrere verschiedene Übersetzungsstufen bereitstellt. Die außerhalb des Planetengetriebes mögliche Umschaltung des Antriebsdrehmomentweges (Krafteinleitung in das Hohlrad bzw. in den Planetenradträger) ermöglicht es, daß mit unterschiedlich verlaufendem Kraftfluß das Ziehkeil-Getriebe zweimal eingesetzt und durchgeschaltet werden kann. Das an sich bekannte Prinzip der Totgangvermeidung durch Sicherheitsschrägflächen an den Schaltorganen, die bei unrichtiger Einstellung immer für Eingriff der Kupplungsorgane sorgen, ist hier an den Sonnenrädern verwirklicht. Diese sind axial federbelastet und können ausweichen, wenn der Schubklotz eine Zwischenstellung erreicht hat und mit den Schrägflächen zusammenwirkt. Da beim Planetengetriebe die geringsten Drehmomente am Sonnenrad auftreten, ist es besonders vorteilhaft, dieses mit den Schaltorganen (Schubklotz) auszubilden.

Die erfindungsgemäße Mehrgangsnabe zeichnet sich durch ruhigen Lauf, hohen Wirkungsgrad sowie relativ geringe Herstellungskosten und leichte Demontierbarkeit, insbesondere für Reparaturzwecke, aus.

Die Erfindung wird im folgenden an bevorzugten Ausführungsbeispielen anhand der Zeichnung erläutert. Es zeigt:
- Fig. 1: einen teilweisen Längsschnitt einer bevorzugten Ausführungsform der erfindungsgemäßen 7-Gang-Antriebsnabe mit Rücktrittbremse für Fahrräder (Schnitt nach Linie I-I in Fig. 1A);
- Fig. 1A: einen Schnitt der Mehrgangnabe gemäß Fig. 1 nach Linie IA-IA;
- Fig. 2: eine Teilansicht des Längsschnitts in Fig. 1, in der die Sonnenräder in einer Schalt-Zwischenstellung dargestellt sind;
- Fig. 3: das kleinste Sonnenrad in der Draufsicht;
- Fig. 4: einen Längsschnitt dieses kleinsten Sonnenrads;
- Fig. 5: das mittlere Sonnenrad mit Schrägflächen in der Draufsicht;
- Fig. 6: einen Längsschnitt des mittleren Sonnenrads;
- Fig. 7: das größte Sonnenrad mit Schrägflächen in der Draufsicht;
- Fig. 8: einen Längsschnitt des größten Sonnenrads;
- Fig. 9: eine schemaartige Darstellung der Schaltfolge in den einzelnen Schubklotzstellungen;
- Fig. 10: eine Getriebe-Prinzipskizze mit permanentem Zahneingriff zwischen dem Hohlrad und der kleinsten Stufe des Planetenrads gemäß der in Fig. 1 dargestellten ersten Ausführungsform der Erfindung;
- Fig. 11: eine Prinzipskizze entsprechend Fig. 1, jedoch mit permanentem Zahneingriff zwischen dem Hohlrad und der mittleren Stufe des Planetenrads; und
- Fig. 12: eine Prinzipskizze, ähnlich Fig. 10, jedoch mit permanentem Zahneingriff zwischen dem Hohlrad und der größten Stufe des Planetenrads.

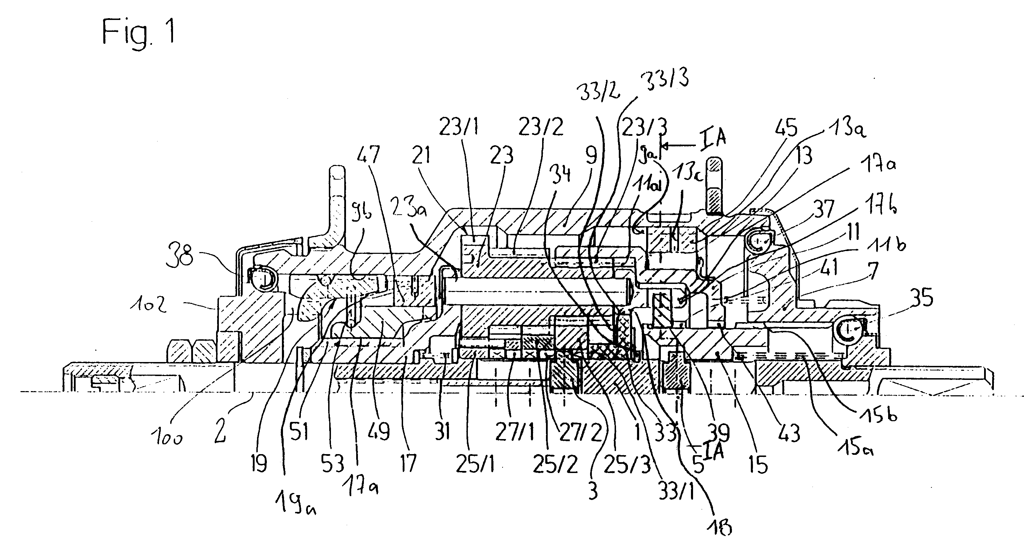

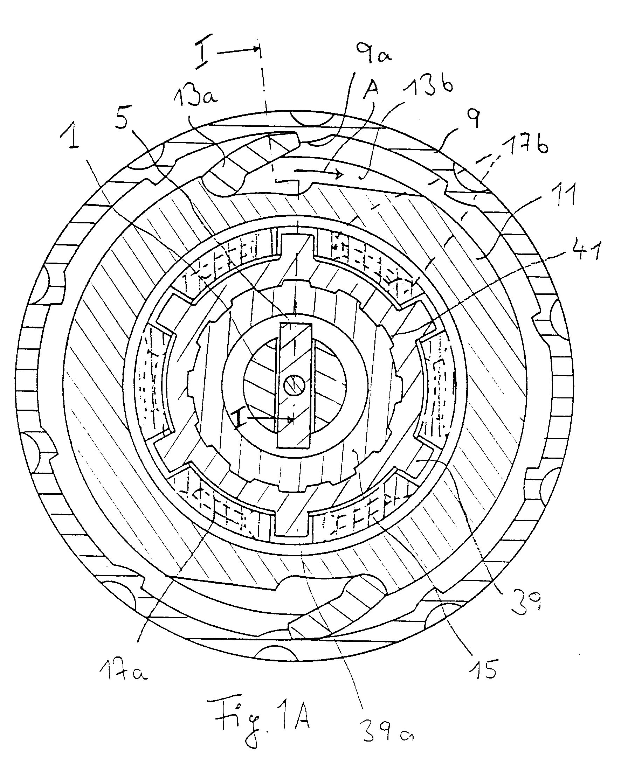

Die Fig. 1 und 1A zeigen eine 7-Gang-Antriebsnabe mit Rücktrittbremseinrichtung für ein Fahrrad, mit einer am nicht dargestellten Fahrradrahmen drehfest angebrachten Nabenachse 1, deren Längsachse eine Drehachse 2 der Antriebsnabe definiert. Ein Antreiber 7 ist über ein Kugellager 35 an der Nabenachse 1 drehbar gelagert. Am Antreiber 7 ist ein oder ggf. auch mehrere Kettenräder (nicht dargestellt) angebracht, die über eine Kette mit einem oder mehreren Kettenrädern (Kettenblättern) am Tretlager des Fahrrads verbunden ist. Eine Nabenhülse 9, die über nicht dargestellte Fahrradspeichen mit der Fahrradfelge verbunden ist, ist über ein weiteres Kugellager 37 drehbar am Antreiber 7 gelagert, um sich so an der Nabenhülse 9 abzustützen. Das andere Ende der Nabenhülse 9 ist auf der Nabenachse mittels eines Kugellagers 38 drehbar gelagert.

Innerhalb der rohrförmig ausgebildeten Nabenhülse 9 ist neben einer durch Rücktritt betätigbaren Bremse 19 ein Planetengetriebe 21 angeordnet. Dieses besteht aus einem Hohlrad 11, einem Planetenradträger 17 und einem oder mehreren, auf einem Kreis um die Drehachse 2 gleichmäßig verteilten 3-stufigen Planetenrädern 23, deren Stufen 23/1,23/2 und 23/3 ständig mit Sonnenrädern 25/1,25/2 und 25/3 in gegenseitigem Zahneingriff stehen. Eine Innenumfangsverzahnung 11a des Hohlrads 11 steht in ständigem Zahneingriff mit der kleinsten Zahnradstufe 23/3.

Das Hohlrad 11 ist mit der Nabenhülse 9 über einen Freilauf verbunden. Dieser wird von einem Klinkengesperre 13 gebildet, deren Klinken 13a in Klinkenausnehmungen 13b des Hohlrads 11 um eines ihrer Enden schwenkbar gelagert sind, mit Vorspannung der Klinken zur Schwenkbewegung radial nach außen durch eine nicht dargestellte, einen Schlitz 13c der Klinken 13a durchsetzenden Vorspannfeder. Die Klinken 13 wirken mit geprägten, radial nach innen vorstehenden Rastvorsprüngen 9a der Nabenhülse 9 derart zusammen, daß die Nabenhülse 9 von den Klinken 14 mitgenommen wird, wenn sich das Hohlrad 11 in Antriebsdrehrichtung (Pfeil A in Fig. 1A) dreht.

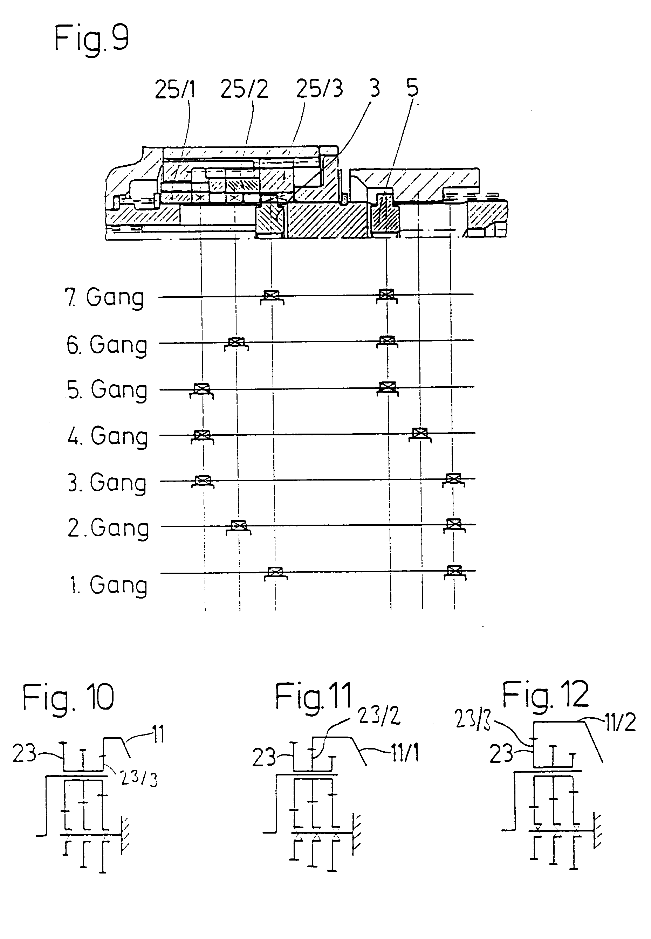

In der dargestellten Ausführungsform gemäß den Fig. 1, 1A und 10 kämmt das Hohlrad 11 ständig mit der kleinsten Stufe 23/3 des Planetenrads 23. In dieser Anordnung erhält man beispielsweise einen Übersetzungsbereich (Getriebekapazität) von ca. 240%.

Für bestimmte Fahrradtypen, insbesondere solche, die von sportlicheren Fahrern benutzt werden, reicht diese Getriebekapazität von 240% in vielen Fällen nicht aus. Hier hat sich als besonders zweckmäßig und daher besonders bevorzugt eine Getriebeausbildung gemäß Fig. 11 herausgestellt, bei der das Hohlrad 11/1 in ständigem Zahneingriff mit der mittleren Stufe 23/2 des Planetenrads 23 steht. Man erhält hier eine Getriebekapazität von etwa 285%.

Eine weitere Steigerung der Getriebekapazität, nämlich auf angenähert 360%, erhält man dann, wenn man gemäß Fig. 12 das Hohlrad 11/2 in ständigem Zahneingriff mit der größten Stufe 23/3 des Planetenrads 23 hält.

Zur Umschaltung zwischen verschiedenen Antriebsdrehmomentwegen ist ein Kupplungsrad 15 vorgesehen, welches auf der Nabenachse 1 drehbar und axial verschiebbar gelagert ist, mit Vorspannung in eine in Fig. 1 dargestellte linke Endstellung mittels einer Vorspannfeder 15a. Das Kupplungsrad 15 ist über eine gegenseitige Nutverzahnung 15b mit dem Antreiber 7 drehfest, jedoch relativ zum Antreiber parallel zur Drehachse 2 verschiebbar angeordnet. Die Verschiebung entgegen der Kraft der Feder 15a erfolgt über einen Schubklotz 5, der in nicht dargestellter Weise mit einem Schaltgestänge verbunden ist.

In der in den Fig. 1, 1A und 9, oben dargestellten Schaltstellung (7. Gang = Schnellgang) verläuft das Antriebsdrehmoment vom Antreiber 7 über das Kupplungsrad 15 auf einen mit dem Kupplungsrad 15 über eine gegenseitige Nutverzahnung drehfest verbundenen Zahnstern 39 und von diesem auf den Planetenradträger 17. In der dargestellten Stellung befinden sich nämlich die Zähne 39a des Zahnsterns 39 in Umfangsrichtung in bezug auf die Drehachse 2 jeweils zwischen axial vorstehenden Mitnahmevorsprüngen 17a des Planetenradträgers 17. Um das Eintreten und Austreten der Zähne 39a aus dem Bereich der Mitnahmevorsprünge 17a beim Umschalten zu erleichtern, sind die Mitnahmevorsprünge 17a mit Abweisschrägflächen 17b (in Fig. 1A strichliert angedeutet) versehen.

Der Kraftfluß verläuft also vom Antreiber 7 über das Kupplungsrad 19 auf den Planetenradträger 17. Das vom Planetenradträger 17 mitgenommene Planetenrad 23 rollt am momentan drehfest mit der Nabenachse 1 verbundenen größten Sonnenrad 25/3 ab und nimmt daher das Hohlrad 11 mit, da dieses mit dem Planetenrad 23 ständig über die kleinste Stufe 23/3 in Zahneingriff steht. Das Hohlrad 11 wiederum nimmt über das Klinkengesperre 13 die Nabenhülse 9 mit. Die Drehgeschwindigkeit des Hohlrads 11 und damit der Nabenhülse 9, ist hierbei stets größer als die des Planetenradträgers 17 und damit des Antreibers 7. Man erhält also eine Übersetzung ins Schnelle, wobei das jeweilige Übersetzungsverhältnis um so größer ist, je größer das momentan an der Nabenachse 2 drehfest festgelegte Sonnenrad ist.

Schiebt man den Schubklotz 5 durch entsprechende Betätigung des nicht dargestellten Schaltgestänges nach rechts bis zur Anlage des Zahnsterns 39 an einem sich radial erstreckenden Boden 11b des Hohlrads 11, so gelangt eine Außenverzahnung des Kupplungsrads 15 in Eingriff mit einer entsprechenden Innenverzahnung 43 des Bodens 11b des Hohlrads 11. Man erhält auf diese Weise den direkten Gang (Übersetzungsverhältnis 1 : 1). Der Kraftfluß läuft nämlich vom Antreiber 7 über das Kupplungsrad 15 unmittelbar auf das Hohlrad 11 und dann über das Klinkengesperre 13 direkt zur Nabenhülse 9.

Wird der Schubklotz 5 aus dieser Mittellage weiter in seine rechte Extremlage geschoben, so wird hierbei das Hohlrad 11 vom Zahnstern 39 nach rechts mitgenommen. Die Folge ist, das auch das eben noch in Eingriff mit der Nabenhülse 11 befindliche Klinkengesperre 13 nach rechts geschoben wird. Im Laufe dieser Verschiebung schwenkt eine in Fig. 1 angedeutete Abweisschräge 45 am Innenumfang der Nabenhülse 9 sämtliche Klinken 13a soweit radial nach innen schwenkt, daß diese außer Eingriff mit den Vorsprüngen 9a gelangen. Der Kraftfluß verläuft nun vom Antreiber 7 über das Kupplungsrad 15, das Hohlrad 11, die Planetenräder 23, den Planetenradträger 17 und ein mit diesem gekoppeltes und auf einem Bremskonus 49 angeordnetes Klinkengesperre 47 zur Nabenhülse. Dieses Klinkengesperre 47 ist im übrigen dann unwirksam, wenn der Kraftfluß vom Hohlrad 11 über das Klinkengesperre 13 zur Nabenhülse 9 verläuft, da in diesem Falle die Nabenhülse 9 sich schneller dreht als der Planetenradträger 17. Das Klinkengesperre 47 wird dann von der Nabenhülse 9 überholt.

In der rechten Extremlage des Schubklotzes wird also das Hohlrad 11 vom Antreiber unmittelbar angetrieben, so daß die Antriebsnabe eine Übersetzung ins Langsamere (Berggänge) aufweist.

In der dargestellten Antriebsnabe nach der Erfindung weisen die Planetenräder 23 jeweils drei gegeneinander nicht verdrehbare Stufen 23/1,23/2 und 23/3 auf, die jeweils mit einem zugeordneten Sonnenrad kämmen. Die große Stufe 23/1 kämmt mit dem kleinen Sonnenrad 25/1, die mittlere Stufe 23/2 mit dem mittleren Sonnenrad 25/2 und die kleine Stufe 23/3 mit dem großen Sonnenrad 25/3. Anstelle von drei Zahnradstufen und drei Sonnenrädern können bedarfsweise auch mehr Stufen und Sonnenräder vorgesehen sein.

Der Berggang mit der größten Untersetzung (1. Gang gemäß Fig. 9) wird dadurch eingestellt, daß das größte Sonnenrad 25/3 an der Nabenachse 2 festgelegt wird. Bei Festlegen des mittleren Sonnenrads 25/2 ergibt sich eine kleinere Untersetzung und bei Festlegen des kleinen Sonnenrads 25/1 noch kleinere Untersetzung.

Dementsprechend erhält man in der linken Extremstellung des Schaltklotzes 5 den extremsten Schnellgang (7. Gang gemäß Fig. 9) mit der größten Übersetzung, wenn das große Sonnenrad 25/3 festgelegt ist. Durch Festlegen des Sonnenrads 25/2 erhält man eine mittlere Übersetzung und durch Festlegen des kleinen Sonnenrads 25/3 eine kleine Schnellgangübersetzung.

Nur in der Mittelstellung des Schubklotzes 5 (direkter Gang = 4. Gang gemäß Fig. 9) ist das dreistufige Planetengetriebe 21 praktisch unwirksam. Wie bei den Schnellgängen (5. - 7. Gang) wird das auf dem Bremskonus 49 liegende Klinkengesperre 27 von der schnellerlaufenden Nabenhülse 9 überholt. Es kommt im direkten Gang daher nicht darauf an, welches der Sonnenräder 25 momentan drehfest an der Nabenachse 1 festgelegt ist.

Die sieben möglichen Gänge können also wie folgt angewählt werden:
Der 7. Gang wird dadurch angewählt, daß man den Schubklotz 5 in die linke Extremstellung gemäß Fig. 1 bringt und das große Sonnenrad 25/3 durch einen Schubklotz 3 an der Nabenachse 2 drehfest festlegt. Der 6. Gang wird unter Beibehaltung des Antriebsdrehmomentweges "Schnellgang" (Beibehaltung der linken Extremposition des Schubklotzes 5) durch Verschieben des Schubklotzes 3 nach links und somit durch Festlegen des Sonnenrads 25/2 angewählt. Wird der Schubklotz in die linke Extremposition weitergezogen, so wird dadurch das Sonnenrad 25/1 festgelegt und der 5. Gang angewählt.

Der 4. Gang wird als direkter Gang durch Änderung des Antriebsdrehmomentweges von der Schnellgangposition in die Direktgangposition erreicht. Hierzu ist, wie bereits angesprochen, der Schubklotz in seine mittlere Lage zu bewegen. Dabei ist es, wie schon beschrieben, unerheblich, welche Position der Schubklotz 3 in diesem Gang hat, da das Planetengetriebe nicht in Aktion ist. Läßt man den Schubklotz 3 in der Stellung des 5. Ganges stehen, die gemäß Fig. 9 der Position des 3. Ganges entspricht, so genügt es, den Schubklotz 5 in seine rechte Extremposition zu verschieben, um den 3. Gang anzuwählen. Der 2. und 1. Gang werden durch stufenweises Weiterschieben des Schubklotzes 3 geschaltet, wodurch wiederum der Reihe nach die Sonnenräder 25/1,25/2 und 25/3 nacheinander an der Nabenachse 1 drehfest festgelegt werden.

Hieraus ergibt sich, daß zum Wechsel von einem Gang auf den nächstfolgenden stets nur ein einziger Schubklotz (entweder Schubklotz 3 oder Schubklotz 5) zu bewegen ist, und zwar jeweils nur um eine Stufe. Hierdurch ist es möglich, eine nicht dargestellte Betätigungseinrichtung zum Schalten der Antriebsnabe mit einem manuellen Kombinationsschalter zu versehen, der, beispielsweise kurvengesteuert, für nur geringe Schaltkräfte ausgelegt sein muß. Die Schaltwege der beiden Schubklötze sind optimal kurz und überschneiden sich zeitlich nicht.

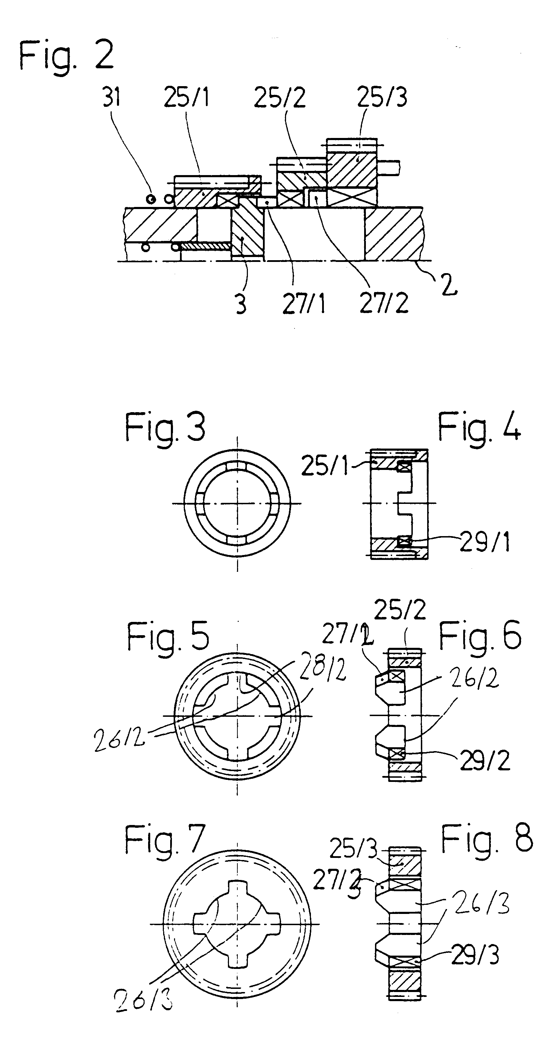

Um eine Leerstellung zwischen den einzelnen Gangstufen zu verhindern, sind die Sonnenräder 25/2 und 25/3 (Fig. 5 - 8) jeweils mit Abweisschrägflächen 27/2 bzw. 27/3 versehen, wie dies an sich bereits aus der eingangs genannten GB-PS 21 66 502 bekannt ist. Diese Leerlaufstellungen oder Totgangstellungen zwischen einzelnen Fahrstufen können für den Fahrradfahrer gefährlich sein, da er bei nicht exakter Einstellung der Fahrradnabe oder beim Gangwechsel die Pedale unter Umständen frei durchtreten kann. Die Abweisschrägfläche 27/3 wird dann wirksam, wenn der Schubklotz 3 zwischen radial nach innen vorstehende Kupplungszähne 26/2 des Zahnrads 25/2 und radial nach innen vorstehende Kupplungszähne 26/3 des Zahnrads 25/3 gerät, aus welcher Richtung auch immer der Schubklotz 3 kommt. Aufgrund der Drehbewegung des vom Planetenrad 23 angetriebenen Sonnenrades 25/3 schiebt die jeweilige, am Kupplungszahn 26/3 ausgebildete Abweisschrägfläche 27/3 den Schubklotz 3 in axialer Richtung nach links auf das nächstfolgende Sonnenrad 25/2 zu. Falls sich dort gerade eine Zahnlücke 28/2 zwischen aufeinanderfolgenden Kupplungszähnen 26/2 befindet, wird der Schubklotz 3 sogleich in diese Zahnlücke 28/2 geschoben. Ist dies jedoch nicht der Fall, dann schiebt der Schubklotz 3 das Sonnenrad 25/2 und mit diesem auch das Sonnenrad 25/1 entgegen der Kraft einer Feder 31 in Fig. 1 nach links, wo die Sonnenräder 25/2 und 25/1 solange unter Federvorspannung bleiben, bis der Schubklotz 3 einer Zahnlücke 28/2 gegenüberliegt, so daß die Feder 31 die Sonnenräder 25/1 und 25/2 wieder nach rechts in ihre Wirkposition zurückschieben können. In der gleichen Weise arbeiten die Abweisschrägflächen 27/2 an den Kupplungszähnen 26/2 des Sonnenrads 25/2, die ein Ausweichen des Sonnenrads 25/1 nach links entgegen der Kraft der Feder 31 bewirken.

Die durch Rücktritt betätigbare Bremse 19 wird durch Verschieben des Bremskonus 49 in Richtung zur Bremse 19 hin aktiviert. Der Bremskonus 49 ist auf einem ersten Lagerabschnitt 17a am in Fig. 1 linken Ende des Planetenradträgers 17 gelagert, und zwar über ein Steilgewinde 51. Dreht sich der Planetenradträger 17 entgegen der Antriebsrichtung A (s. Fig. 1), so schiebt sich der durch eine Friktionsfeder 53 in seiner jeweiligen Position gehaltene Bremskonus 49 nach links auf eine Gegenkonusfläche 19a der Brems 19 zu, um dann die Bremse 19 radial nach außen gegen eine Innenumfangs-Reibfläche 9b der Nabenhülse 9 zu drücken. Die Bremse 19 in Form von Bremsbacken ist über axiale Vorsprünge 100 eines an der Nabenachse 1 drehfest angebrachten Nabenflansches 102 gegen Mitdrehen gesichert. Der Nabenflansch 102 trägt das bereits eingangs erwähnte Lager 38.

Im Antriebsdrehmomentweg bei eingeschaltetem Schnellgang (Gänge 5, 6 und 7 gemäß Fig. 9) ist, wie in Fig. 1 dargestellt, der Antreiber 7 mit dem Planetenradträger 17 über das Kupplungsrad 15 und dessen Zahnstern 39 direkt verbunden. Dies bedeutet, daß in den Gängen 5, 6 und 7 das Bremsmoment 1 : 1 übertragen wird. Im Antriebsdrehmomentweg des direkten Ganges (4. Gang) sowie im Antriebsdrehmomentweg der Berggänge (1. - 3. Gang) ist der Antreiber 7 mit dem Planetenradträger 17 über das Kupplungsrad 15, das Hohlrad 11 und das jeweils festgelegte Sonnenrad 25/1 oder 25/2 oder 25/3 mit entsprechender Drehmomentuntersetzung verbunden, wodurch sich eine entsprechende Bremskraftverstärkung und damit erhöhte Bremswirkung erzielen läßt.

Auch ist es von Vorteil, den Planetenradträger 17 auf der Nabenachse 1 doppelt zu lagern, was mit Hilfe des Lagerrings 33 erreicht wird. Dieser zentriert das Planetengetriebe 21 auf der Nabenachse, so daß sich ruhiger, verschleißarmer Betrieb unter allen möglichen Betriebszuständen und Belastungszuständen ergibt. Der Lagerring 33 hat im Querschnitt der Fig. 1 angenähert L-Form. Er umfaßt einen Hohlzylinderabschnitt 33/1, dessen in Fig. 1 linkes Stirnende einen Axialanschlag für die Sonnenräder 25/1, 25/2 und 25/3 bildet. An den Hohlzylinderabschnitt 33/1 schließt sich ein sich radial nach außen erstreckender Ringflanschabschnitt 33/2 an, dessen Außenumfangsfläche 33/3 als Lagerfläche für einen zweiten Lagerabschnitt 18 des Planetenradträgers 17 dient. Der Durchmesser der an der Lagerfläche 33/3 anliegenden entsprechenden Lagerfläche des Lagerabschnitts 18 ist etwas größer als der Umkreisdurchmesser des größten Sonnenrads 25/3. Außerdem fällt der Umkreisdurchmesser der Sonnenrader 25/1,25/2,25/3 von Sonnenrad zu Sonnenrad in Richtung nach links in Fig. 1 ab.

Der Zusammenbau des Planetengetriebes 21 kann daher in einfacher Weise wie folgt erfolgen:
Als erstes wird der insbesondere aus Kunststoff bestehende Lagerring 33 von links auf die Nabenachse 2 aufgeschoben, bis er an einem in einer Umfangsnut der Nabenachse 1 eingesetzten Sprengring 34 anschlägt. Anschließend werden die drei Sonnenräder 25/1,25/2,25/3 in der richtigen Reihenfolge von links auf die Nabenachse 1 aufgeschoben. Als nächstes erfolgt die Montage des Planetenradträgers 17, auf dem bereits die Planetenräder 23 mit Hilfe von Planetenradachsen 23a vormontiert sind. Der Planetenradträger 17 wird wiederum von links auf die Nabenachse 1 aufgeschoben unter Zwischenlage der Feder 31, wobei die Stufen der Planetenräder 23 in Eingriff mit den zugeordneten Sonnenräder 25 gelangen und schließlich der vorlaufende Lagerabschnitt 18 zur Anlage an der Lagerfläche 33/3 des Lagerrings 33 gelangt.

Die Demontage, beispielsweise zu Reparaturzwecken, geht in der umgekehrten Reihenfolge vonstatten.

Die vorstehend beschriebene Mehrgang-Antriebsnabe zeichnet sich durch eine Vielzahl von beispielsweise 7-Gang-Stufen aus, mit je nach Auslegung der Nabe eng benachbarten oder größere Übersetzungsverhältnisunterschiede aufweisenden Gängen. Das dabei eingesetzte Planetengetriebe weist mehrere Übersetzungsstufen aus, die wahlweise derartig angewählt werden können, daß jeweils eines der mitlaufenden Sonnenräder festgelegt wird. Dieses mehrstufige Planetengetriebe wird mit der üblichen Schaltung einer 3-Gang-Nabe kombiniert, die drei Antriebsdrehmomentwege, nämlich Direktgang, Schnellgang und Berggang aufweist. Hierzu wird der Antreiber wahlweise mit dem Planetenradträger oder dem Hohlrad des Planetengetriebes verbunden. Bei dem im Ausführungsbeispiel dargestellten dreistufigen Planetenradgetriebe erhält man somit drei Schnellgänge, einen Direktgang und drei Berggänge, was zu einer mehr oder weniger eng gestuften 7-Gang-Nabe führt. Die Schaltfolge ist einfach, da jeweils nur ein einziges Schaltelement (Schaltklotz) um einen Schritt zu bewegen ist. Dies ermöglicht den Einsatz einfach ausgebildeter Bedienungsorgane. Schließlich ist die Nabe gegen ein freies Durchtreten der Fahrradkurbel gesichert und bietet schließlich Kostenvorteile, da Teile herkömmlicher 3-Gang- oder 5-Gang-Naben mit Verwendung finden können.

## Patentansprüche

1. Mehrgang-Antriebsnabe für Fahrräder, umfassend:
- eine an einem Fahrradrahmen drehfest anbringbare Nabenachse (1),
- einen an der Nabenachse (1) um eine Drehachse (2) drehbar gelagerten Antreiber (7),
- eine an der Nabenachse (1) drehbar gelagerte, ein Nabenschaltgetriebe umgreifende Nabenhülse (9),
- ein Planetengetriebe (21) als Teil des Nabenschaltgetriebes, umfassend:
- einen in Richtung der Drehachse (2) länglichen Planetenradträger (17), welcher im Bereich eines seiner beiden Axial-Enden mittels eines ersten Lagerabschnitts an der Nabenachse (1) um die Drehachse (2) drehbar gelagert ist,
- wenigstens ein am Planetenradträger (17) drehbar gelagertes, mehrstufiges Planetenrad (23),
- jeweils ein den einzelnen Stufen (23/1, 23/2, 23/3) des Planetenrads (23) zugeordnetes und mit diesen Stufen kämmendes Sonnenrad (25/1, 25/2, 25/3), welches auf der Nabenachse (1) um die Drehachse (2) drehbar gelagert ist und in einer jeweiligen axialen Zuschaltposition wahlweise mit der Nabenachse (1) drehfest verbindbar ist,
- ein innerhalb der Nabenhülse (9) um die Drehachse (2) drehbar gelagertes Hohlrad (11), welches mit einer Stufe (23/3) des Planetenrads (23) kämmt,
- eine Kupplungseinrichtung (15) zur Koppelung des Antreibers (7) mit dem Planetenradträger (17) oder mit dem Hohlrad (11),
- eine an der Nabenachse (1) beweglich gelagerte Schalteinrichtung (3,5) für das Nabenschaltgetriebe,
dadurch **gekennzeichnet,**
daß der Planetenradträger (17) im Bereich seines anderen Axial-Endes mit einem zweiten Lagerabschnitt (18) an der Nabenachse (1) drehbar gelagert ist.

2. Mehrgang-Antriebsnabe nach Anspruch 1,
dadurch **gekennzeichnet,**
daß der zweite Lagerabschnitt (18) mittels eines zur Drehachse (2) konzentrisch angeordneten, gesonderten Lagerrings (33) an der Nabenachse (1) gelagert ist.

3. Mehrgang-Antriebsnabe nach Anspruch 2,
dadurch **gekennzeichnet,**
daß der Lagerring (33) einen Anschlagsabschnitt (33/1) aufweist, der einen Axialanschlag für die Sonnenräder (25/1, 25/2, 25/3) bildet.

4. Mehrgang-Antriebsnabe nach Anspruch 3,
dadurch **gekennzeichnet,**
daß der Lagerring (33) einen Hohlzylinder-Abschnitt (33/1) aufweist, dessen eines Zylinderende den Axialanschlag bildet und an dessen anderem Zylinderende ein sich radial nach außen erstreckender Ringflansch-Abschnitt (33/2) ausgebildet ist, dessen Außenumfangsfläche als Lagerfläche (33c) für den zweiten Lagerabschnitt (18) des Planetenradträgers (17) ausgebildet ist.

5. Mehrgang-Antriebsnabe nach einem der Ansprüche 2 - 4,
dadurch **gekennzeichnet,**
daß der Durchmesser (d) eines eine Lagerfläche (33c) für den zweiten Lagerabschnitt (18) des Planetenradträgers (17) aufweisenden Abschnitts (33b) des Lagerrings (33) größer ist als der Umkreis-Durchmesser des größten der Sonnenräder (25/1,25/2,25/3).

6. Mehrgang-Antriebsnabe nach einem der vorhergehenden Ansprüche,
dadurch **gekennzeichnet,**
daß der Umkreis-Durchmesser der Sonnenräder (25/1,25/2,25/3) in Richtung vom einen Axial-Ende zum anderen Axial-Ende des Planetenradträgers (17) ansteigt.

7. Mehrgang-Antriebsnabe nach einem der Ansprüche 2 - 6,
dadurch **gekennzeichnet,**
daß die Nabenachse (1) auf der von den Sonnenrädern abgewandten Seite des Lagerrings (33) mit einem Bewegungsanschlag für den Lagerring (33) ausgebildet ist.

8. Mehrgang-Antriebsnabe nach einem der vorhergehenden Ansprüche,
dadurch **gekennzeichnet,**
daß der Antreiber (7) auf der Seite des anderen Axial-Endes des Planetenradträgers (17) angeordnet ist.

9. Mehrgang-Antriebsnabe nach einem der vorhergehenden Ansprüche,
dadurch **gekennzeichnet,**
daß das wenigstens eine Planetenrad (23) wenigstens drei Stufen (23/1, 23/2, 23/3) mit unterschiedlichem Durchmesser aufweist.

10. Mehrgang-Antriebsnabe nach Anspruch 9,
dadurch **gekennzeichnet,**
daß die Stufe mit größtem Durchmesser, die erste Stufe (23/1), mit einem auf der Nabenachse (1) drehbar angeordneten ersten Sonnenrad (25/1) in ständigem Zahneingriff steht.
daß die Stufe mit mittlerem Durchmesser, die zweite Stufe (23/2), mit einem auf der Nabenachse (1) drehbar angeordneten zweiten Sonnenrad (25/2) in ständigem Zahneingriff steht, und
daß die Stufe mit kleinstem Durchmesser, die dritte Stufe (23/3) mit einem auf der Nabenachse (1) drehbar angeordneten dritten Sonnenrad (25/3) in ständigem Zahneingriff steht,

11. Mehrgang-Antriebsnabe nach Anspruch 10,
dadurch **gekennzeichnet,**
daß die Schalteinrichtung ein Kopplungsglied umfaßt, welches eine wahlweise Ansteuerung der Sonnenräder (25/1, 25/2, 25/3) zur drehfesten Verbindung mit der Nabenachse (1) erlaubt, wobei in der Zuschaltposition jeweils eines der Sonnenräder die anderen Sonnenräder jeweils eine axiale Freilaufposition einnehmen, die ihrer jeweiligen axialen Zuschaltposition entspricht.

12. Mehrgang-Antriebsnabe nach Anspruch 11,
dadurch **gekennzeichnet,**
daß das Kopplungsglied von einem an der Nabenachse (1) in zur Drehachse paralleler Richtung beweglich gelagerten Schubklotz (3) gebildet ist, der zur drehfesten Verbindung des jeweiligen Sonnenrads mit der Nabenachse (1) von einem Sonnenrad zum nächsten Sonnenrad verschiebbar ist.

13. Mehrgang-Antriebsnabe nach Anspruch 9, dadurch **gekennzeichnet,**
daß das Planetenrad über seine dritte Stufe (23/3) in ständigem Zahneingriff mit dem Hohlrad (11) steht.

14. Mehrgang-Antriebsnabe nach Anspruch 9,
dadurch **gekennzeichnet,**
daß das Planetenrad (23) über seine zweite Stufe (23/3) in ständigem Zahneingriff mit dem Hohlrad (11/1) steht.

15. Mehrgang-Antriebsnabe nach Anspruch 9,
dadurch **gekennzeichnet,**
daß das Planetenrad (23) über seine erste Stufe (23/1) in ständigem Zahneingriff mit einem Hohlrad (11/2) steht.

16. Mehrgang-Antriebsnabe nach einem der vorhergehenden Ansprüche,
dadurch **gekennzeichnet,**
daß die Sonnenräder (25/1, 25/2, 25/3) an ihrer Innenumfangsfläche mit radialen Kupplungsausnehmungen (28/1, 28/2, 28/3) versehen sind.

17. Mehrgang-Antriebsnabe nach einem der vorhergehenden Ansprüche,
dadurch **gekennzeichnet,**
daß die Sonneräder (25/1, 25/2, 25/3) durch eine an eines der Sonnenräder (25/1) angreifende Druckfeder (31) in einer ersten Richtung parallel zur Drehachse vorgespannt sind, und daß die beiden auf das eine Sonnenrad (25/1) folgenden Sonnenräder (25/2,25/3) an ihren der Druckfeder zugewandten Seiten mit Abweisschrägen (27/2, (27/3) versehen sind, welche mit dem Schubklotz (3) zusammenwirken.

18. Mehrgang-Antriebsnabe nach Anspruch 17,
dadurch **gekennzeichnet,**
daß die Druckfeder (31) das eine Sonnenrad (25/1) vorübergehend in Richtung zur Druckfeder (31) ausweichen läßt, wenn der Schubklotz (3) durch die Abweisschräge (27/2) des nächstfolgenden Sonnenrades (25/2) zwischen das eine Sonnenrad (25/1) und das nächstfolgende Sonnenrad (25/2) gedrückt ist, und daß die Druckfeder (31) das eine (25/1) und das nächstfolgende (25/2) Sonnenrad in Richtung zur Druckfeder (31) ausweichen läßt, wenn der Schubklotz (3) durch die Abweisschrägen (27/2) des auf das nächstfolgende Sonnenrad (25/2) folgenden Sonnenrades (25/3) zwischen das nächstfolgende Sonnenrad (25/2) und das auf das nächstfolgende Sonnenrad (25/2) folgende Sonnenrad (25/3) gedrückt ist.

19. Verfahren zum Zusammenbau einer Mehrgangs-Antriebsnabe, umfassend:
- eine an einem Fahrradrahmen drehfest anbringbare Nabenachse (1),
- einen an der Nabenachse (1) um eine Drehachse (2) drehbar gelagerten Antreiber (7),
- eine an der Nabenachse (1) drehbar gelagerte, ein Nabenschaltgetriebe umgreifende Nabenhülse (9),
- ein Planetengetriebe (21) als Teil des Nabenschaltgetriebes, umfassend:
- einen in Richtung der Drehachse (2) länglichen Planetenradträger (17), welcher im Bereich eines seiner beiden Axial-Enden mittels eines ersten Lagerabschnitts an der Nabenachse (1) um die Drehachse (2) drehbar gelagert ist,
- wenigstens ein am Planetenradträger (17) drehbar gelagertes, mehrstufiges Planetenrad (23),
- jeweils ein den einzelnen Stufen (23/1, 23/2, 23/3) des Planetenrads (23) zugeordnetes und mit diesen Stufen kämmendes Sonnenrad (25/1, 25/2, 25/3), welches auf der Nabenachse (1) um die Drehachse (2) drehbar gelagert ist und in einer jeweiligen axialen Zuschaltposition wahlweise mit der Nabenachse (1) drehfest verbindbar ist,
- ein innerhalb der Nabenhülse (9) um die Drehachse (2) drehbar gelagertes Hohlrad (11), welches mit einer Stufe (23/3) des Planetenrads (23) kämmt,
- eine Kupplungseinrichtung (15) zur Koppelung des Antreibers (7) mit dem Planetenradträger (17) oder mit dem Hohlrad (11),
- eine an der Nabenachse (1) beweglich gelagerte Schalteinrichtung (3,5) für das Nabenschaltgetriebe, wobei der Planetenradträger (17) im Bereich seines anderen Axial-Endes mit einem zweiten Lagerabschnitt (18) mittels eines gesonderten Lagerrings (33) an der Nabenachse (1) gelagert ist, mit folgenden Schritten:
a) Aufschieben des Lagerrings (33) auf die Nabenachse (1);
b) Aufschieben der Sonnenräder (25/1,25/2,25/3) auf die Nabenachse (1) bis zum Anschlag am Lagerring (33);
c) Aufschieben des mit den Planetenrädern (23/1,23/2,23/3) versehenen Planetenradträgers (17) auf die Nabenachse (1).

## Claims

1. Multi-speed drive hub for bicycles comprising:
- a hub shaft (1), which may be non-rotatably attached to the bicycle frame,
- a driver (7) mounted on the hub shaft (1) to rotate around an axis of rotation (2),
- a hub sleeve (9) rotatably mounted on the hub shaft (1) and enveloping a hub shift transmission,
- a planet gear transmission (21) as part of the hub shift transmission, comprising:
- a planet carrier (17), which is elongated in the direction of the axis of rotation (2) and is mounted on the hub shaft (1) to rotate around the axis of rotation (2) in the area of one of its two axial ends by means of a first bearing section,
- at least one multi-step planet gear (23) rotatably mounted on the planet carrier (17),
- a sun gear (25/1, 25/2, 25/3) allocated to each of the individual steps (23/1, 23/2, 23/3) of the planet gear (23) and meshing with these steps, and which is mounted on the hub shaft (1) to rotate around the axis of rotation (2) and may be selectively connected non-rotatably to the hub shaft (1) in a corresponding axial connecting position,
- an internal gear (11) mounted inside the hub sleeve (9) to rotate around the axis of rotation (2) and meshing with a step (23/3) of the planet gear (23),
- a clutch arrangement (15) for coupling the driver (7) to the planet carrier (17) or to the internal gear (11),
- a shift mechanism (3, 5) for the hub shift transmission movably mounted on the hub shaft (1), characterised in that the planet carrier (17) is rotatably mounted on the hub shaft (1) in the area of its other axial end with a second bearing section (18).

2. Multi-speed drive hub according to Claim 1, characterised in that the second bearing section (18) is mounted on the hub shaft (1) by means of a separate bearing ring (33) arranged concentrically to the axis of rotation (2).

3. Multi-speed drive hub according to Claim 2, characterised in that the bearing ring (33) has a stop section (33/1), which forms an axial stop for the sun gears (25/1, 25/2, 25/3).

4. Multi-speed drive hub according to Claim 3, characterised in that the bearing ring (33) has a hollow cylinder section (33/1), one cylinder end of which forms the axial stop and its other cylinder end is provided with a ring flange section (33/2), which extends radially outwards and the outer periphery of which is constructed as a bearing surface (33c) for the second bearing section (18) of the planet carrier (17).

5. Multi-speed drive hub according to one of Claims 2 - 4, characterised in that the diameter (d) of a section (18) of the bearing ring (33) provided with a bearing surface (33c) for the second bearing section (18) of the planet carrier (17) is larger than the peripheral diameter of the largest of the sun gears (25/1, 25/2, 25/3).

6. Multi-speed drive hub according to one of the preceding claims, characterised in that the peripheral diameter of the sun gears (25/1, 25/2, 25/3) increases from one axial end to the other axial end of the planet carrier (17).

7. Multi-speed drive hub according to one of Claims 2 - 6, characterised in that the hub shaft (1) is disposed on the side of the bearing ring (33) averted from the sun gears and provided with a stop to block movement of the bearing ring (33).

8. Multi-speed drive hub according to one of the preceding claims, characterised in that the driver (7) is disposed on the side of the other axial end of the planet carrier (17).

9. Multi-speed drive hub according to one of the preceding claims, characterised in that the at least one planet gear (23) has at least three steps (23/1, 23/2, 23/3) with different diameters.

10. Multi-speed drive hub according to Claim 9, characterised in that the step with the largest diameter, i.e. the first step (23/1), is in constant tooth engagement with a first sun gear (25/1) rotatably disposed on the hub shaft (1); that the step with the medium diameter, i.e. the second step (23/2), is in constant tooth engagement with a second sun gear (25/2) rotatably disposed on the hub shaft (1); and the step with the smallest diameter, i.e. the third step (23/3), is in constant tooth engagement with a third sun gear (25/3) rotatably disposed on the hub shaft (1).

11. Multi-speed drive hub according to Claim 10, characterised in that the shift mechanism comprises a coupling member, which permits selective actuation of the sun gears (25/1, 25/2, 25/3) for non-rotatable connection to the hub shaft (1), in which case in the connecting position of a respective sun gear, the other sun gears each assume an axial free-wheel position corresponding to their respective axial connecting position.

12. Multi-speed drive hub according to Claim 11, characterised in that the coupling member is formed from a thrust block (3), which is movably mounted on the hub shaft (1) in the direction parallel to the axis of rotation and may be moved from one sun gear to the next sun gear for non-rotatable connection of the respective sun gear to the hub shaft (1).

13. Multi-speed drive hub according to Claim 9, characterised in that the planet gear is in constant tooth engagement with the internal gear (11) via its third step (23/3).

14. Multi-speed drive hub according to Claim 9, characterised in that the planet gear (23) is in constant tooth engagement with the internal gear (11/1) via its second step (23/2).

15. Multi-speed drive hub according to Claim 9, characterised in that the planet gear (23) is in constant tooth engagement with the internal gear (11/2) via its first step (23/1).

16. Multi-speed drive hub according to one of the preceding claims, characterised in that the sun gears (25/1, 25/2, 25/3) are provided with radial coupling recesses (28/1, 28/2, 28/3) on their inner periphery.

17. Multi-speed drive hub according to one of the preceding claims, characterised in that the sun gears (25/1, 25/2, 25/3) are pretensioned in a first direction parallel to the axis of rotation by means of a compression spring (31) acting on one of the sun gears (25/1); and that on their sides facing the compression spring, the two sun gears (25/2, 25/3) following the one sun gear (25/1) are provided with sloping guards (27/2, 27/3) which interact with the thrust block (3).

18. Multi-speed drive hub according to Claim 17, characterised in that when the thrust block (3) is pressed by the sloping guard (27/2) of the immediately following sun gear (25/2), the compression spring (31) temporarily allows the one sun gear (25/1) to deflect towards the compression spring (31) between the one sun gear (25/1) and the immediately following sun gear (25/2); and that when the thrust block (3) is pressed by the sloping guard (27/2) of the sun gear (25/3) following the immediately following sun gear (25/2), the compression spring (31) allows the one sun gear (25/1) to deflect towards the compression spring (31) between the immediately following sun gear (25/2) and the sun gear (25/3) following the immediately following sun gear (25/2).

19. Procedure for assembling a multi-speed drive hub, comprising:
- a hub shaft (1), which may be non-rotatably attached to the bicycle frame,
- a driver (7) mounted on the hub shaft (1) to rotate around an axis of rotation (2),
- a hub sleeve (9) rotatably mounted on the hub shaft (1) and enveloping a hub shift transmission,
- a planet gear transmission (21) as part of the hub shift transmission, comprising:
- a planet carrier (17), which is elongated in the direction of the axis of rotation (2) and is mounted on the hub shaft (1) to rotate around the axis of rotation (2) in the area of one of its two axial ends by means of a first bearing section,
- at least one multi-step planet gear (23) rotatably mounted on the planet carrier (17),
- a sun gear (25/1, 25/2, 25/3) allocated to each of the individual steps (23/1, 23/2, 23/3) of the planet gear (23) and meshing with these steps, and which is mounted on the hub shaft (1) to rotate around the axis of rotation (2) and may be selectively connected non-rotatably to the hub shaft (1) in a corresponding axial connecting position,
- an internal gear (11) mounted inside the hub sleeve (9) to rotate around the axis of rotation (2) and meshing with a step (23/3) of the planet gear (23),
- a clutch arrangement (15) for coupling the driver (7) to the planet carrier (17) or to the internal gear (11),
- a shift mechanism (3, 5) for the hub shift transmission movably mounted on the hub shaft (1), wherein the planet carrier (17) is mounted on the hub shaft (1) in the area of its other axial end with a second bearing section (18) by means of a separate bearing ring (33), with the following steps:
a) the bearing ring (33) is drawn onto the hub shaft (1),
b) the sun gears (25/1, 25/2, 25/3) are drawn onto the hub shaft (1) to the stop on the bearing ring (33),
c) the planet carrier (17) provided with the planet gears (23/1, 23/2, 23/3) is drawn onto the hub shaft (1).

## Revendications

1. Moyeu d'entraînement à plusieurs rapports pour bicyclettes, comportant :
- un axe de moyeu (1) à monter immobile en rotation sur un cadre de bicyclette,
- un entraineur (7) monté tournant autour d'un axe de rotation (2), sur l'axe (1),
- une douille de moyeu (9) montée tournante sur l'axe (1), entourant un engrenage de commutation du moyeu,
- un engrenage planétaire (21) faisant partie de l'engrenage de commutation du moyeu, comportant :
- un porte-satellites (17) allongé dans la direction de l'axe de rotation (2), lequel est monté tournant sur l'axe (1) autour de l'axe de rotation (2), dans la région de l'une de ses deux extrémités axiales, au moyen d'une première portion de palier,
- au moins une roue satellite (23) à plusieurs étages, montée tournante sur le porte-satellites (17),
- une roue planétaire (25/1), 25/2, 25/3) associée à chacun des étages (23/1, 23/2, 23/3) de la roue satellite (23) et engrenant avec ces étages, laquelle roue planétaire est montée tournante sur l'axe (1) du moyeu autour de l'axe de rotation (2) et peut être liée solidairement en rotation, dans une position de commande axiale respective, sélectivement, avec l'axe (1) du moyeu,
- une roue creuse (11) montée tournante autour de l'axe de rotation (2), à l'intérieur de la douille de moyeu (9), laquelle roue creuse engrène avec un étage (23/3) de la roue satellite (23),
- un dispositif d'accouplement (15) en vue de l'accouplement de l'entraîneur (7) avec le porte-satellites (17) ou avec la roue creuse (11),
- un dispositif de commutation (3, 5), monté mobile sur l'axe (1) du moyeu pour le mécanisme de commutation du moyeu, caractérisé en ce que le porte-satellites (17) est monté tournant sur l'axe (1) du moyeu, dans la région de son autre extrémité axiale, par une seconde portion de palier (18).

2. Moyeu d'entraînement à plusieurs rapports selon la revendication 1, caractérisé en ce que la seconde portion de palier (18) est montée sur l'axe (1) du moyeu, au moyen d'une bague de palier (33) séparée, concentrique à l'axe de rotation (2).

3. Moyeu d'entraînement à plusieurs rapports selon la revendication 2, caractérisé en ce que la bague de palier (33) comporte une portion de butée (33/1), qui forme une butée axiale pour les roues planétaires (25/1, 25/2, 25/3).

4. Moyeu d'entraînement à plusieurs rapports selon la revendication 3, caractérisé en ce que la bague de palier (33) comporte une portion de cylindre creux (33/1), dont une extrémité du cylindre forme la butée axiale et en ce que sur l'autre extrémité est formée une portion de bride annulaire (33/2), s'étendant radialement vers l'extérieur, dont la surface périphérique extérieure est conçue pour servir de surface d'appui (33c) à la seconde portion de palier (18) du porte-satellites (17).

5. Moyeu d'entraînement à plusieurs rapports selon l'une des revendications 2 à 4, caractérisé en ce que le diamètre (d) d'une portion (33b) de la bague de palier (33), présentant une surface d'appui (33c) pour la seconde portion de palier (18) du porte-satellites (17), est supérieur au diamètre du cercle circonscrit à la plus grande des roues planétaires (25/1, 25/2, 25/3).

6. Moyeu d'entraînement à plusieurs rapports selon l'une des revendications précédentes, caractérisé en ce que le diamètre du cercle circonscrit aux roues planétaires (25/1, 25/2, 25/3) augmente en direction d'une extrémité axiale vers l'autre extrémité axiale du porte-satellites (17).

7. Moyeu d'entraînement à plusieurs rapports selon l'une des revendications 2 à 6, caractérisé en ce que l'axe (1) du moyeu est formé sur le côté, tourné à l'opposé des roues planétaires, de la bague de palier (33), avec une butée de déplacement pour la bague de palier (33).

8. Moyeu d'entraînement à plusieurs rapports selon l'une des revendications précédentes, caractérisé en ce que l'entraîneur (7) est placé sur le côté de l'autre extrémité axiale du porte-satellites (17).

9. Moyeu d'entraînement à plusieurs rapports selon l'une des revendications précédentes, caractérisé en ce qu'une roue satellite (23) au moins comporte au moins trois étages (23/1, 23/2, 23/3) de diamètres différents.

10. Moyeu d'entraînement à plusieurs rapports selon la revendication 9, caractérisé en ce que l'étage de plus grand diamètre, à savoir le premier étage (23/1), engrène constamment avec une première roue planétaire (25/1), montée tournante sur l'axe (1) du moyeu,
en ce que, l'étage de diamètre moyen, à savoir le deuxième étage (23/2), engrène constamment avec une deuxième roue planétaire (25/2), montée tournante sur l'axe (1) du moyeu, et
en ce que l'étage de plus petit diamètre, à savoir le troisième étage (23/3), engrène constamment avec une troisième roue planétaire (25/3), montée tournante sur l'axe (1) du moyeu.

11. Moyeu d'entraînement à plusieurs rapports selon la revendication 10, caractérisé en ce que le dispositif de commutation comporte un organe d'accouplement, qui permet de commander au choix les roues planétaires (25/1, 25/2, 25/3), en vue de leur immobilisation en rotation sur l'axe (1) du moyeu, et en ce que dans la position ainsi enclenchée de l'une des roues planétaires, les autres roues planétaires prennent une position de roue libre axiale, qui correspond à leur position de commande axiale respective.

12. Moyeu d'entraînement à plusieurs rapports selon la revendication 11, caractérisé en ce que l'organe d'accouplement est formé par un bloc de poussée (3), monté mobile dans une direction parallèle à l'axe de rotation, sur l'axe (1) du moyeu, lequel bloc est déplaçable d'une roue planétaire à la roue planétaire suivante, en vue de l'immobilisation en rotation de la roue planétaire respective sur l'axe (1) du moyeu.

13. Moyeu d'entraînement à plusieurs rapports selon la revendication 9, caractérisé en ce que la roue satellite engrène en permanence avec la roue creuse (11), par l'intermédiaire de son troisième étage (23/3).

14. Moyeu d'entraînement à plusieurs rapports selon la revendication 9, caractérisé en ce que la roue satellite (23) engrène en permanence avec la roue creuse (11/1), par l'intermédiaire de son deuxième étage (23/3).

15. Moyeu d'entraînement à plusieurs rapports selon la revendication 9, caractérisé en ce que la roue satellite (23) engrène en permanence avec la roue creuse (11/2), par l'intermédiaire de son premier étage (23/1).

16. Moyeu d'entraînement à plusieurs rapports selon l'une des revendications précédentes, caractérisé en ce que les roues planétaires (25/1, 25/2, 25/3) sont pourvues, sur leur surface périphérique intérieure, d'évidements d'accouplement (28/1, 28/2, 28/3) radiaux.

17. Moyeu d'entraînement à plusieurs rapports selon l'une des revendications précédentes, caractérisé en ce que les roues planétaires (25/1, 25/2, 25/3) sont précontraintes par un ressort de pression (31), agissant contre l'une des roues planétaires (25/1), dans une première direction, parallèlement à l'axe de rotation, et en ce que les deux roues planétaires (25/2, 25/3) suivant une roue planétaire (25/1) sont pourvues, sur leurs côtés tournés vers le ressort de pression, de surfaces de déflexion (27/2, 27/3), qui coopèrent avec le bloc de poussée (3).

18. Moyeu d'entraînement à plusieurs rapports selon la revendication 17, caractérisé en ce que le ressort de pression (31) fait dévier une roue planétaire (25/1) transitoirement en direction du ressort de pression (31), lorsque le bloc de poussée (3) est pressé, par la surface oblique de déflexion (27/2) de la roue planétaire (25/2) suivante, entre une roue planétaire (25/1) et la roue planétaire (25/2) suivante, et en ce que le ressort de pression (31) fait dévier une roue planétaire (25/1) et la roue planétaire (25/2) suivante en direction du ressort de pression (31), lorsque le bloc de poussée (3) est pressé, par les surfaces obliques de déflexion (27/2) de la roue planétaire (25/3) faisant suite à la roue planétaire (25/2) suivante, entre la roue planétaire (25/2) suivante et la roue planétaire (25/3), faisant suite à la roue planétaire (25/2) suivante.

19. Procédé d'assemblage d'un moyeu d'entraînement à plusieurs rapports, comportant :
- un axe de moyeu (1) à monter immobile en rotation sur un cadre de bicyclette,
- un entraîneur (7) monté tournant autour d'un axe de rotation (2), sur l'axe (1),
- une douille de moyeu (9) montée tournante sur l'axe (1), entourant un engrenage de commutation du moyeu,
- un engrenage planétaire (21) faisant partie de l'engrenage de commutation du moyeu, comportant :
- un porte-satellites (17) allongé dans la direction de l'axe de rotation (2), lequel est monté tournant sur l'axe (1) autour de l'axe de rotation (2), dans la région de l'une de ses deux extrémités axiales, au moyen d'une première portion de palier,
- au moins une roue satellite (23) à plusieurs étages, montée tournante sur le porte-satellites (17),
- une roue planétaire (25/1), 25/2, 25/3) associée à chacun des étages (23/1, 23/2, 23/3) de la roue satellite (23) et engrenant avec ces étages, laquelle roue planétaire est montée tournante sur l'axe (1) du moyeu autour de l'axe de rotation (2) et peut être liée solidairement en rotation, dans une position de commande axiale respective, sélectivement, avec l'axe (1) du moyeu,
- une roue creuse (11) montée tournante autour de l'axe de rotation (2), à l'intérieur de la douille de moyeu (9), laquelle roue creuse engrène avec un étage (23/3) de la roue satellite (23),
- un dispositif d'accouplement (15) en vue de l'accouplement de l'entraîneur (7) avec le porte-satellites (17) ou avec la roue creuse (11),
- un dispositif de commutation (3, 5), monté mobile sur l'axe (1) du moyeu pour le mécanisme de commutation du moyeu, dans lequel le porte-satellites (17) est monté tournant sur l'axe (1) du moyeu, dans la région de son autre extrémité axiale, par une seconde portion de palier (18), le procédé comportant les étapes suivantes :
a) la bague de palier (33) est enfilée sur l'axe de moyeu (1) ;
b) les roues planétaires (25/1, 25/2, 25/3) sont enfilées sur l'axe (1) jusqu'à venir en butée contre la bague de palier (33) ;
c) le porte-satellites (17), pourvu des roues satellites (23/1, 23/2, 23/3), est enfilé sur l'axe de moyeu (1).
